# EUROPEAN PATENT APPLICATION

(11) **EP 2 400 222 A1**
(43) Date of publication of application: **28.12.2011**
(21) Application number: 10167460.4
(22) Date of filing: 28.06.2010
(51) Int. Cl.: F23R 3/28, F23R 3/34

(54) **A combustion apparatus**

(71) Applicant: Siemens Aktiengesellschaft, 80333 München (DE)
(72) Inventor: Sanderson, Victoria, Newark, NG24 4SR (GB)

(57) **Abstract**

The present invention discloses a combustion apparatus 100, which comprises a first device 10 for mixing a fuel with an oxidant, a combustion chamber 12 in which combustion of the fuel/oxidant mix takes place, a pre-chamber 14 located between the first device 10 and the combustion chamber 12, wherein the first device 10 is adapted for outputting the oxidant or the fuel or the fuel/oxidant mix to the pre-chamber 14 and a second device 16 for outputting a gas flow 20 into the pre-chamber 14, wherein the second device 16 is located upstream of the first device 10. With a combustion apparatus 100 according to the present invention an enhancement of the stability of the combustion and reduction of the emissions can be realized.

## Description

The present invention relates to a combustion apparatus. More particularly, the present invention relates to a radial burner with an axial pilot. Furthermore, the present invention relates to a gas turbine engine.

In combustion systems combustion instabilities are a significant issue since these instabilities can result from hydrodynamic or thermoacoustic instabilities. Combustion systems, which use a high level of swirl to produce a flow structure with a central recirculation, produce a shear layer, in which a flame can stabilize. This swirling and the highly turbulent nature of the flow can also result in coherent vortical structures and vortex shedding. These instabilities combined with the local mixing and velocity all have a significant impact on the stability of the combustion process. A piloting system, which increases the unmixedness of the combustion mixture, improves the stability but has an adverse impact on the emissions - particularly NOx - from the burner.

EP 0 660 038 B1 describes a fuel injection apparatus exhibiting a generally hollow center body located coaxially within a fuel and air mixing duct, wherein the interior of the center body is supplied with fuel and air and is so arranged as to mix the fuel and the air supplied thereto and to exhaust the mixture from its downstream end, wherein the center body downstream end is positioned in the region of the downstream end of the mixing duct so that in operation the fuel and air mixture is issued from the center body downstream end for combustion in the combustion chamber.

An object of the present invention is to provide a combustion apparatus having a large stability of the combustion with reduced flashbacks. A further object of the present invention is to improve premixing of fuel and oxidant in the pilot. A further object of the present invention is to reduce the emissions (NOx) of the combustion apparatus, while still ensure rapid fueling to the combustion process to enhance the combustion stability. These objects are achieved by a combustion apparatus according to claim 1 of the present invention and by a gas turbine engine according to claim 14 of the present invention. Advantageous embodiments are disclosed in the dependent claims of the present invention.

More particularly, according to the present invention there is provided a combustion apparatus which comprises a first device adapted for mixing a fuel with an oxidant, a combustion chamber, in which a combustion of the fuel/oxidant mix takes place, a pre-chamber, which is located between the first device and the combustion chamber, wherein the first device is adapted for outputting the oxidant or the fuel or the fuel/oxidant mix to the pre-chamber and a second device adapted for outputting a gas flow into the pre-chamber, wherein the second device is located upstream of the first device.

In the present invention the term upstream means the direction from the combustion chamber towards the pre-chamber towards the first device towards the second device. On the other hand, the term downstream describes a direction from the second device towards the first device towards the pre-chamber towards the combustion chamber. A positive axial direction can be defined as a direction starting from a face of the burner and pointing in direction of the combustion chamber. According to the above mentioned terminology, the positive axial direction is the downstream direction. A negative axial direction then would be the upstream direction.

The geometry of the combustion apparatus can be substantially cylindrical, at least in parts, but the present invention is not limited to this geometry and symmetry, respectively. Other geometries of the combustion apparatus appearing applicable for the person skilled in the art are also possible.

In the above described combustion apparatus the first device can be adapted for generating a flow structure of the fuel/oxidant mix, wherein the flow structure exhibits a central recirculation. Furthermore, in the above described combustion apparatus the second device can be adapted for coupling a gas flow into the central recirculation.

By coupling the gas flow into the central recirculation the gas is directed at the edge of the inner recirculation zone. Therefore, the flow of the fuel/oxidant mix can be stabilized by the gas flow into the pre-chamber induced by the second device, stabilizing the combustion stability of the combustion apparatus and reducing flashbacks of the combustion. Furthermore, vortical structures promoting instabilities are reduced by coupling the gas flow into the central recirculation, wherein the gas flow is emitted from the second device.

The central recirculation described above is a flow structure, which begins in the pre-chamber and which extends to the combustion chamber, where a combustion of the fuel/oxidant mix takes place.

In the above described combustion apparatuses the first device can exhibit a first center axis and the second device can be located radially-inwardly towards the first center axis. In other words, the first device may be arranged about the first center axis, the apparatus having a distance to this first center line which is greater than a distance of the second device to that first center line.

By this arrangement of the first and second devices a coupling of the gas flow into the central recirculation is promoted.

In the above described combustion apparatus the second device can exhibit a second center axis, wherein the first center axis and the second center axis are coaxial, paraxial, parallel, identical or congruent. In the above described combustion apparatus the second device may be substantially coaxial to the first device.

By a corresponding arrangement of the first and second device the realization of a combustion apparatus is facilitated.

Furthermore, the above described combustion apparatuses can comprise a back plate, wherein the first device is located between the back plate and the pre-chamber. Furthermore, the above described combustion apparatuses can comprise a spacer plate, which is located between the back plate and the first device, wherein the spacer plate is arranged in such a way that a path for the gas to the second device is generated.

By a corresponding arrangement of the back plate and the spacer plate the path for the gas to the second device makes it possible that the first device and the second device use the same gas/oxidant from a common source.

In the above described combustion apparatuses fuel galleries can be arranged in the back plate supplying fuel to the first device and/or the second device.

In the above described combustion apparatuses the second device can be arranged for mixing the fuel with the gas. Thereby, the flow of a fuel/oxidant mix into the pre-chamber is realized. Furthermore, a coupling of the fuel/oxidant mix into the central recirculation is realized. Thereby, an improved pre-mixing is achieved, which benefits the emissions while still a rapid fueling to the combustion process is ensured, which aids the stability.

In the above described combustion apparatuses the first device can comprise a swirler.

The swirler creates a swirling mix of the fuel and the oxidant, which travels along the pre-chamber to the combustion chamber. Advantageously, the swirler is a radial swirler, i.e. the oxidant and/or the fuel/oxidant mix is outputted in a radial direction towards the center axis of the swirler. Nevertheless, the present invention is not limited to a radial swirler. The swirler can also be an axial swirler outputting the oxidant and/or the fuel/oxidant mix into an axial direction of the pre-chamber.

In the above described combustion apparatus the swirler can comprise a plurality of slots guiding the oxidant and/or the fuel/oxidant mix, wherein the slots are arranged in a circle and extend generally radially inwardly.

In the above described combustion apparatus the swirler can comprise an annular base plate and a plurality of vanes, which are arranged circumferentially spaced around the annular base plate so as to form between adjacent vanes a plurality of slots for guiding the oxidant and/or the fuel/oxidant mix.

The above described vanes can for example be wedge pieces. Furthermore, the outputting/jetting of fuel from the vanes and/or the annular base plate is variable.

In the above described combustion apparatuses the second device can comprise a swirler, in particular an axial swirler.

An axial swirler is a swirler, which is adapted for outputting the gas and/or the fuel/gas mixture in an axial direction. Nevertheless, the present invention is not limitted to an axial swirler. The second device can also comprise a radial swirler, wherein paths from the radial swirler are arranged from the radial swirler towards the pre-chamber, wherein these paths realize an axial flow/coupling of the gas and/or the fuel/gas mixture into the pre-chamber.

In the above described combustion apparatus the swirler can comprise a plurality of slots guiding the gas and/or the fuel/gas-mix.

In the above described apparatus the swirler can comprise an annular base plate and a plurality of vanes arranged circumferentially spaced around the annular base plate so as to form between adjacent vanes the slots for guiding the gas and/or the fuel/gas mix.

In the case when the second device comprises a radial swirler the above described vanes can be wedge pieces.

In the above described combustion apparatuses the oxidant can be air and/or the gas can be the oxidant. Moreover, the oxidant can be oxygen and/or fluorine and/or chlorine.

The present invention also discloses a gas turbine engine comprising one of the above described combustion apparatuses.

In the above described gas turbine engine gas from a compressor of the engine can be shared between the first device and the second device, wherein the majority of the gas is supplied to the first device.

Nevertheless, the present invention is not limited to this arrangement. The majority of the gas can also be supplied to the second device.

The present invention will now be described by way of example with reference to the accompanying drawings, in which:
- Figure 1: is a schematic cross-sectional side view of a combustion apparatus according to the prior art,
- Figure 2: is a schematic cross-sectional side view of a combustion apparatus according to the present invention.

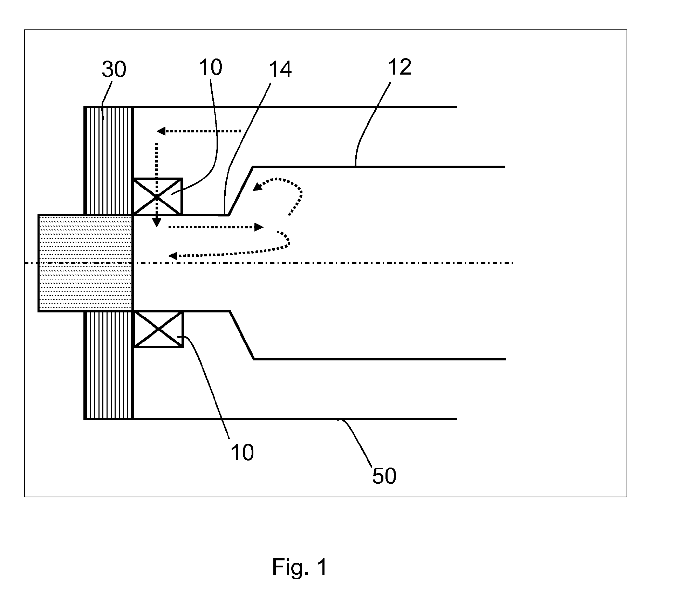

Figure 1 of the present invention shows a cross-section side view of a combustion apparatus, particularly of a gas turbine engine, according to the prior art. The combustion apparatus shown in Figure 1 shows a combustion chamber 12, a pre-chamber 14 located upstream of the combustion chamber 12, a first device 10 for mixing a fuel with an oxidant, wherein the first device 10 is located upstream of the pre-chamber 14. Moreover, the combustion apparatus according to the prior art also comprises a back plate 30 and an outer casing 50.

An oxidant, such as for example air, is supplied by a compressor to the first device 10. The flow direction of the oxidant is indicated by dotted arrows shown in the upper part of Figure 1. The first device 10 is adapted for mixing a fuel, which can be supplied by fuel galleries through the back plate 30, with the oxidant supplied by a not shown compressor. The first device 10 outputs the oxidant or the fuel/oxidant mix into the pre-chamber. In the case shown in Figure 1 the combustion apparatus exhibits a cylindrical geometry so that the first device 10 outputs the oxidant or the fuel/oxidant mix towards the center axis of the combustion apparatus and the first device 10, respectively. According to the radial output of the oxidant or the fuel/oxidant mix from the first device 10, a flow structure of the fuel/oxidant mix with a central recirculation is generated in the pre-chamber 14. The flow structure having the central recirculation extends from the pre-chamber 14 into the combustion chamber 12. Within the flow structure having the central recirculation indicated by the dotted arrows extending from the pre-chamber 14 into the combustion chamber 12 a shear layer is produced, in which a flame in the combustion chamber 12 can stabilize. This swirling and highly turbulent nature of the flow can result in coherent vortical structures and in vortex shedding. Theses instabilities combined with the local mixing and velocity all have a significant impact on the stability of the combustion process. Due to the instability for example a flashback of the flame can be induced.

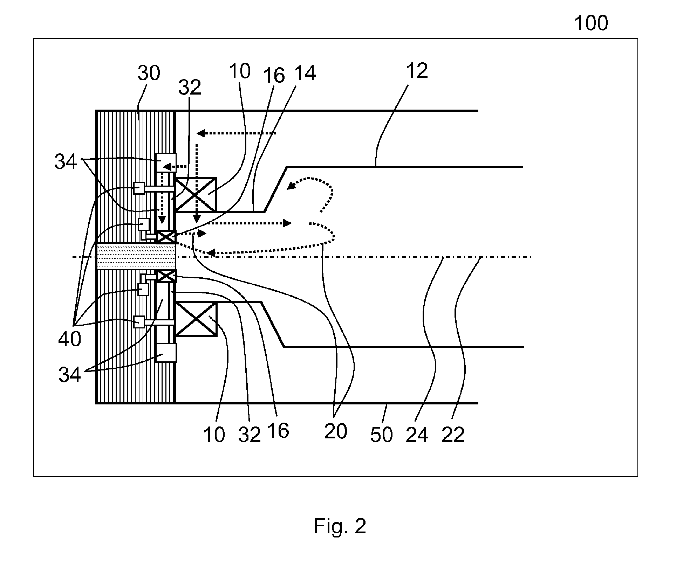

Figure 2 of the present invention shows a cross-sectional side view of a combustion apparatus 100 according to the present invention. The combustion apparatus 100 shown in Figure 2 may be part of a gas turbine engine and comprises a first device 10 adapted for mixing a fuel with an oxidant, a combustion chamber 12 in which combustion of the fuel/oxidant mix takes place, a pre-chamber 14 located between the first device 10 and the combustion chamber 12, wherein the first device 10 is adapted for outputting the oxidant or the fuel or the fuel/oxidant mix to the pre-chamber 14, and a second device 16 for outputting a gas flow 20 into the pre-chamber 14, wherein the second device is located upstream of the first device 10. Thereby, the term upstream indicates the position of a device relative to another device. In the present invention the second device 16 is located upstream of the first device 10 and the first device 10 is located upstream of the pre-chamber 14, and the pre-chamber 14 is located upstream of the combustion chamber 12.

In the combustion apparatus 100 shown in Figure 2, oxidant e.g. air is supplied from a not shown compressor to a first device 10. The flow direction of the oxidant is indicated by dotted arrows in the upper part of Figure 2. The first device 10 is adapted for outputting the oxidant into the pre-chamber 14. In the pre-chamber 14 the oxidant is for example mixed with a fuel supplied to the pre-chamber 14. But the present invention is not limited thereto that the fuel is supplied to the pre-chamber 14 for example through a fuel gallery located in the back plate, but it is also possible that the mix of the oxidant and the fuel is already conducted in the first device 10. It is for example possible that a fuel gallery 40 supplies fuel to the first device 10. The fuel is then mixed with the oxidant by the first device 10 and this fuel/oxidant mix is outputted to the pre-chamber 14. The combustion apparatus 100 shown in Figure 2 has a cylindrical structure. I.e. the first device 10 exhibits a first center axis 22. The oxidant or the fuel/oxidant mix outputted by the first device 10 into the pre-chamber 14 is outputted in a radial direction towards the first center axis 22. Therefore, a vortex flow structure of the fuel/oxidant mix is realized in the pre-chamber 14 extending into the combustion chamber 12.

In Figure 2 of the present invention the first device 10 outputs the oxidant or the fuel/oxidant mix into a substantially radial direction towards the first center axis 22. Nevertheless, the present invention is not limited thereto that the first device 10 outputs the oxidant or the fuel/oxidant mix into a radial direction. The first device 10 also could e.g. output the oxidant or the fuel/oxidant mix into an axial direction, when a first device 10 would be arranged inside the pre-chamber 14.

The second device 16 is adapted for outputting a gas flow 20 into the pre-chamber 14. This gas flow 20 can stabilize the flow structure of the fuel/oxidant mix induced by the first device 10 into the pre-chamber 14 into the combustion chamber 12. Therefore, the flow structure of the fuel/oxidant mix in the pre-chamber 14 into the combustion chamber 12 is stabilized by the gas flow 20 induced by the second device 16.

In the combustion apparatus 100 shown in Figure 2 of the present invention the second device 16 outputs the gas flow 20 into an axial direction. Nevertheless, the present invention is not limited thereto that the second device 16 outputs the gas flow 20 into an axial direction. The second device 16 also could be adapted for outputting the gas flow 20 into a radial direction, when paths, not shown in Figure 2, would direct this gas flow 20 into an axial direction.

In the combustion apparatus 100 shown in Figure 2 of the present invention fuel galleries 40 are adapted for supplying fuel to the second device 16. In this case the second device 16 is adapted for mixing the oxidant with the supplied fuel whereby the pre-mixing of the fuel/oxidant mix is improved. Thereby, the emissions (NOx) are lowered, while at the same time a rapid fueling to the combustion process is ensured stabilizing the combustion process.

Nevertheless, the present invention is not limited thereto that fuel galleries supply fuel to the second device 16. It is also possible that fuel is outputted into the pre-chamber 14 through other openings of the back plate 30.

The introduction of an oxidant or a fuel/oxidant mix into the inner shear layer will stiffen the flow in this area reducing the potential for some vortical structures, which can promote instabilities.

In the combustion apparatus 100 shown in Figure 2 of the present invention the combustion apparatus 100 further comprises a back plate 30. The first device 10 is located between the back plate 30 and the pre-chamber 14. Furthermore, the combustion apparatus 100 comprises a spacer plate 32 located between the back plate 30 and the first device 10. Thereby, the spacer plate 32 is arranged in such a way that a path 34 for the gas, such as an oxidant, to the second device 16 is generated. The path 34 is therefore arranged between the back plate 30 and the spacer plate 32. The supply of oxidant may be of a common source and may be divided to supply path 34 and eventually the second device 16 and also to supply the first device 10.

Nevertheless, the present invention is not limited thereto that the gas and the oxidant, respectively, is supplied to the second device 16 by the path 34. Other ways of supplying the gas and the oxidant, respectively, to the first device 10 which appear convenient for the man skilled in the art are also possible.

In the combustion apparatus 100 shown in Figure 2 of the present invention the first device 10 comprises a swirler. This swirler is adapted for creating a swirling mix of the fuel and oxidant, which travels along the pre-chamber 14 to the combustion chamber 12. In this case, the swirler 10 is a radial swirler, i.e. the oxidant and or the fuel/oxidant mix is outputted in a radial direction towards the first center axis 22.

The swirler 10 shown in Figure 2 can comprise a plurality of not shown slots guiding the oxidant and/or the fuel/oxidant mix, wherein the slots are arranged in a not shown circle and extend generally radially inwardly. Moreover, the swirler 10 can comprise a not shown annular base plate and a not shown plurality of vanes arranged circumferentially spaced around the annular base plate so as to form between adjacent vanes slots for guiding the oxidant and/or the fuel/oxidant mix.

In the combustion apparatus 100 shown in Figure 2 of the present invention the second device 16 comprises a swirler, in particular an axial swirler. This axial swirler 16 can comprise a plurality of not shown slots guiding the gas and/or the fuel/gas-mix. Moreover, the swirler 16 can comprise a not shown annular base plate and a plurality of vanes arranged circumferentially spaced around the not shown annular base plate so as to form between adjacent vanes the slots for guiding the gas and/or the fuel/gas-mix. In case of a radial swirler 16 of the second device 16 the vanes can be wedge pieces.

In Figure 2 the second device 16 exhibits a second center axis 24, which is coaxial or identical to the first center axis 22.

With the combustion apparatus 100 according to the present invention an improvement of the premixing of oxidant with fuel is realized. Thereby, the emissions (NOx) are lowered while at the same time a rapid fueling to the combustion process is ensured whereby the stability is enhanced. The introduction of the oxidant or the fuel/oxidant mix directly into the inner shear layer stiffens the flow in the pre-chamber 14 and the combustion chamber 12 whereby the potential for some vortical structures is reduced and therefore the promotion of instabilities is reduced.

## Claims

1. A combustion apparatus (100) comprising:
a first device (10) for mixing a fuel with an oxidant;
a combustion chamber (12) in which combustion of the fuel/oxidant mix takes place;
a pre-chamber (14) located between the first device (10) and
the combustion chamber (12), wherein the first device (10) is adapted for outputting the oxidant or the fuel or the fuel/oxidant mix to the pre-chamber (14);
a second device (16) for outputting a gas flow (20) into the pre-chamber (14), wherein the second device (16) is located upstream of the first device (10).

2. The combustion apparatus (100) according to claim 1, wherein the first device (10) is adapted for generating a flow structure of the fuel/oxidant mix having a central recirculation and wherein the second device (16) is adapted for coupling the gas flow (20) into the central recirculation.

3. The combustion apparatus (100) according to claim 1 or 2, wherein the first device (10) exhibits a first center axis (22) and the second device (16) is located radially-inwardly towards the first center axis (22).

4. The combustion apparatus (100) according to claim 3, wherein the second device (16) exhibits a second center axis (24), the first center axis (22) and the second center axis (22) being substantially parallel.

5. The combustion apparatus (100) according to one of the claims 1 to 4, further comprising a back plate (30), wherein the first device (10) is located between the back plate (30) and the pre-chamber (14), a spacer plate (32) located between the back plate (30) and the first device (10), wherein the spacer plate (32) is arranged in such a way that a path (34) for the gas to the second device (16) is generated.

6. The combustion apparatus (100) according to one of the claims 1 to 5, wherein the second device (16) is further arranged for mixing the fuel with the gas.

7. The combustion apparatus (100) according to one of the claims 1 to 6, wherein the first device (10) comprises a swirler.

8. The combustion apparatus (100) according to claim 7, wherein the swirler (10) comprises a plurality of slots guiding the oxidant and/or the fuel/oxidant mix, the slots being arranged in a circle and extending generally radially inwardly.

9. The combustion apparatus (100) according to claim 8, wherein the swirler (10) comprises an annular base plate and a plurality of vanes arranged circumferentially spaced around the annular base plate so as to form between adjacent vanes the slots for guiding the oxidant and/or the fuel/oxidant mix.

10. The combustion apparatus (100) according to one of the claims 1 to 9, wherein the second device (16) comprises a swirler, in particular an axial swirler.

11. The combustion apparatus (16) according to claim 10, wherein the swirler (16) comprises a plurality of slots guiding the gas and/or the fuel/gas mix.

12. The combustion apparatus (100) according to claim 11, wherein the swirler (16) comprises an annular base plate and a plurality of vanes arranged circumferentially spaced around the annular base plate so as to form between adjacent vanes the slots for guiding the gas and/or the fuel/gas mix.

13. The combustion apparatus (100) according to any one of the preceding claims, wherein the gas is the oxidant and/or the oxidant is air.

14. A gas turbine engine comprising a combustion apparatus according to any one of the preceding claims.

15. The gas turbine engine according to claim 14, wherein compressed gas from a compressor of the engine is shared between the first device (10) and the second device (16), the majority of the gas being supplied to the first device (10).
